# EUROPÄISCHE PATENTSCHRIFT

(11) **EP 3 360 505 B1**
(45) Veröffentlichungstag und Bekanntmachung des Hinweises auf die Patenterteilung: **11.03.2020**
(21) Anmeldenummer: 18152323.4
(22) Anmeldetag: 18.01.2018
(51) Int. Cl.: A61C 3/06

(54) **ROTIERBARES DENTAL-POLIERINSTRUMENT**
ROTATABLE DENTAL POLISHING INSTRUMENT
INSTRUMENT DE POLISSAGE DENTAIRE ROTATIF

(30) Priorität: 09.02.2017 DE 102017202098
(43) Veröffentlichungstag der Anmeldung: 15.08.2018
(73) Patentinhaber: Gebr. Brasseler GmbH & Co. KG, 32657 Lemgo (DE)
(72) Erfinder: RAHN, Robert, 32791 Lage (DE)
(74) Vertreter: Hoefer & Partner Patentanwälte mbB

(56) Entgegenhaltungen:
- FR-A1- 2 439 066
- US-A1- 2005 136 812
- US-A1- 2013 086 764
- US-A1- 2013 302 751

## Beschreibung

Die vorliegende Erfindung betrifft ein rotierbares Dental-Polierinstrument zum Polieren von Oberflächen im Dentalbereich.

Rotierbare Dentalinstrumente zum Polieren sind in unterschiedlichen Ausgestaltungen bekannt und werden zum Polieren einer Vielzahl von Dentalmaterialien, wie beispielsweise natürlichen Zähnen, künstlichen Zähnen, Kronen, Füllungen und dgl. verwendet. Hierbei ist es wünschenswert, wenn derartige dentale Polierinstrumente eine möglichst hohe Standzeit aufweisen. Aus der WO 2012/067951A1 ist beispielsweise ein rotierbares Dentalinstrument zum Polieren bekannt, bei dem zwei Reihen von nachgiebigen Polierfingern angeordnet sind. Hierbei ist die zweite Reihe von Polierfingern in Umfangsrichtung versetzt zur ersten Reihe von Polierfingern, sodass die Polierfinger der zweiten Reihe bei Draufsicht auf das dentale Instrument in den Zwischenräumen der Polierfinger der ersten Reihe liegen. Die FR 2 439 066 A1 zeigt ein Dental-Polierinstrument. Die US 2013/302751 A1 zeigt ein weiteres Dental-Polierinstrument.

Es ist Aufgabe der vorliegenden Erfindung, ein rotierbares Dental-Polierinstrument bereitzustellen, welches bei einfachem Aufbau und einfacher, kostengünstiger Herstellbarkeit eine verbesserte Standzeit aufweist.

Diese Aufgabe wird durch ein Dental-Polierinstrument mit den Merkmalen des Anspruchs 1 gelöst. Die Unteransprüche zeigen bevorzugte Weiterbildungen der Erfindung.

Das erfindungsgemäße rotierbare Dental-Polierinstrument mit den Merkmalen des Anspruchs 1 weist den Vorteil einer verbesserten Standzeit auf und kann trotzdem kostengünstig und einfach, beispielsweise mittels Spritzgießen oder Gießen in eine Form, hergestellt werden. Erfindungsgemäß kann hierbei eine Kontaktfläche des Polierinstruments vergrößert werden, wodurch die Standzeit des Dentalinstruments signifikant verlängert wird. Dies wird erfindungsgemäß dadurch erreicht, dass das rotierbare Dental-Polierinstrument einen Zentralbereich und eine Vielzahl von Polierfingern aufweist, welche am Zentralbereich angeordnet sind und vom Zentralbereich vorstehen. Die Vielzahl von Polierfingern steht dabei in einer Ebene senkrecht zu einer Rotationsachse des Polierinstruments vom Zentralbereich vor. Die Polierfinger sind dabei flexibel und wenigstens einer der Polierfinger weist an einem vom Zentralbereich abgewandten Endbereich des Polierfingers eine Verdickung auf. Durch die Verdickung kann beim Poliervorgang eine mit dem zu polierenden Gegenstand in Eingriff befindliche Oberfläche des Dental-Polierinstruments vergrößert werden. Dabei ist die Verdickung ausschließlich an einer Seite des Polierfingers angeordnet. D. h., die Verdickung steht vom Polierfinger nur an einer Seite des Polierfingers vor. Die Verdickung steht bevorzugt an der in Rotationsrichtung gerichteten Seite des Polierfingers vor.

Vorzugsweise ist das Dental-Polierinstrument derart vorgesehen, dass jeder Polierfinger bogenförmig ausgebildet ist. Dabei ist jeder Polierfinger vorzugsweise in einem Teilkreisbogen ausgeführt. Besonders bevorzugt ist ferner hierbei die konvexe Seite des gebogenen Polierfingers in Rotationsrichtung des Dental-Polierinstruments ausgerichtet.

Besonders bevorzugt weisen die Polierfinger einen viereckigen, insbesondere quadratischen, Querschnitt auf. Dadurch kann bei Verwendung des Instruments eine große Fläche der Polierfinger zum Polieren verwendet werden.

Weiter bevorzugt definieren die Verdickungen der Polierfinger eine Hüllkurve des Dental-Polierinstruments. Im Vergleich mit einem Instrument ohne Verdickungen liegen erfindungsgemäß mehr Punkte des Dental-Polierinstruments auf der Hüllkurve.

Weiter bevorzugt weisen die Verdickungen an den Polierfingern eine kreisbogenförmige Außenkontur mit einem ersten Radius R1 auf.

Weiter bevorzugt ist dabei ein kantenfreier Übergang zwischen dem Hauptkörper der Polierfinger der Verdickung am Polierfinger vorgesehen.

Bevorzugt sind die Verdickungen derart ausgebildet, dass eine Vergrößerung einer Polierfläche um mehr als 200 % im Vergleich zu Polierfingern ohne Verdickung erreicht wird. Die Vergrößerung ist besonders bevorzugt ungefähr 287 %.

Vorzugsweise ist ein Volumen einer Verdickung ca. 40 % eines Volumens eines Polierfingers ohne Verdickung.

Besonders bevorzugt weisen alle Polierfinger eine Verdickung auf. Die Verdickungen an den Polierfingern stehen dabei bevorzugt in Rotationsrichtung des Dental-Polierelements vor. Somit kann während des Poliervorgangs sichergestellt werden, dass eine große Fläche der Polierfinger, insbesondere die Verdickungen am Polierfinger, mit der zu bearbeitenden Oberfläche in Kontakt kommt.

Weiter bevorzugt ist ein freies Ende des Polierfingers mit einem zweiten Radius R2 abgerundet, welcher vorzugsweise kleiner ist als der erste Radius R1 der Verdickung.

Weiter bevorzugt ist die Anzahl der Polierfinger des Dental-Polierinstruments ungerade, insbesondere bevorzugt Siebzehn. Vorzugsweise ist der Zentralbereich auf einem Schaft angeordnet, wobei der Schaft eingerichtet ist mit einem Antrieb verbunden zu werden.

Die Verdickung am Polierfinger ist vorzugsweise am freien Ende etwas zurückversetzt. Dadurch kann bei einem nur leichten Ansetzen des Instruments mit dem abgerundeten freien Ende ein kleiner Bereich einer Oberfläche bearbeitet werden, ohne dass die Verdickung in Kontakt mit der zu bearbeitenden Oberfläche kommt.

Weiter bevorzugt sind der Zentralbereich des Dental-Polierinstruments und die Polierfinger einstückig aus dem gleichen Material hergestellt. Als Material wird vorzugsweise ein Verbundmaterial, umfassend ein Grundmaterial und eine Vielzahl von Polierschleifkörnern, vorgesehen. Das Grundmaterial ist als Bindungsmaterial vorgesehen, um die Polierschleifkörner zu binden. Das Polierkorn ist vorzugsweise Diamant, SiC, Al₂O₃ oder Ähnliches. Das Grundmaterial ist vorzugsweise Polyurethan.

Weiter bevorzugt erweitert sich ein Zwischenraum zwischen benachbarten Polierfingern in Richtung zum freien Ende der Polierfinger.

Nachfolgend wird ein bevorzugtes Ausführungsbeispiel der Erfindung unter Bezugnahme auf die begleitende Zeichnung im Detail beschrieben. In der Zeichnung ist:
- Fig. 1: eine schematische Seitenansicht eines Dental-Polierinstruments gemäß einem bevorzugten Ausführungsbeispiel der Erfindung,
- Fig. 2: eine Draufsicht des Dental-Polierinstruments 1 von Fig. 2, und
- Fig. 3: eine vergrößerte Darstellung eines Polierfingers mit Verdickung von Fig. 2.

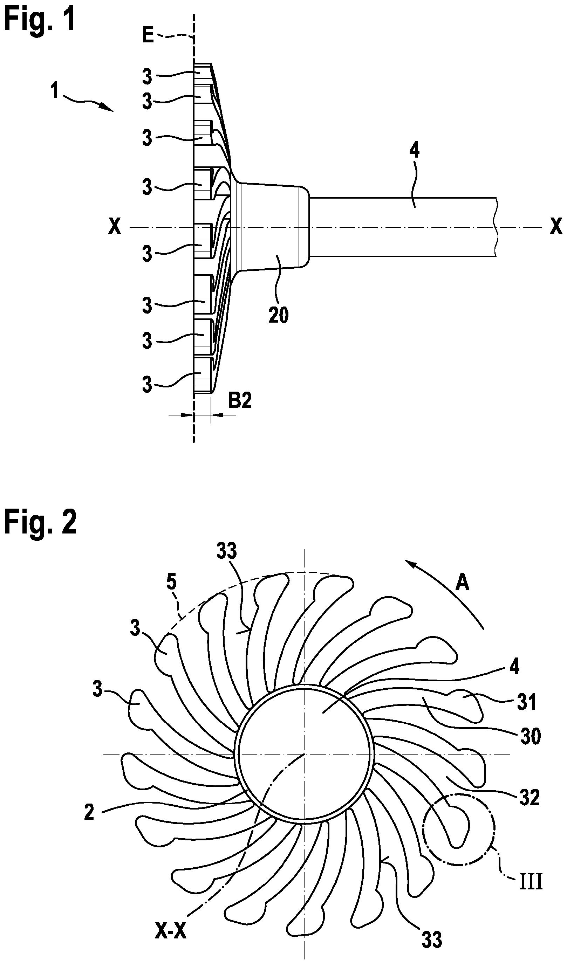

Nachfolgend wird unter Bezugnahme auf die Fig. 1 bis 3 ein Dental-Polierinstrument 1 gemäß einem bevorzugten Ausführungsbeispiel der Erfindung im Detail beschrieben.

Wie aus Fig. 2 ersichtlich ist, umfasst das Dental-Polierinstrument 1 einen Zentralbereich 2 sowie eine Vielzahl von Polierfingern 3. Die Polierfinger 3 sind einstückig mit dem Zentralbereich 2 gebildet und stehen vom Zentralbereich 2 vor.

Wie aus Fig. 1 ersichtlich ist, sind die Polierfinger 3 dabei in einer Ebene E angeordnet, welche senkrecht zu einer Mittelachse X-X des Dental-Polierinstruments ist.

Die Polierfinger 3 sind entlang des Umfangs des Zentralbereichs 2 mit gleichen Abständen angeordnet. Die Polierfinger 3 sind dabei alle identisch ausgebildet.

Wie insbesondere aus Fig. 2 ersichtlich ist, weisen die Polierfinger 3 jeweils einen Hauptkörper 30 und eine Verdickung 31 auf. Die Verdickung 31 ist an einem vom Zentralbereich 2 abgewandten Endbereich des Polierfingers 3 vorgesehen. Die Polierfinger 3 sind bogenförmig ausgeführt. Eine konvexe Seite 33 des bogenförmigen Polierfingers ist in Rotationsrichtung A gerichtet.

Wie aus Fig. 2 ersichtlich ist, sind die Verdickungen 31 dabei jeweils nur an einer Seite der Polierfinger 3 vorgesehen. Die Polierfinger 3 weisen einen viereckigen Querschnitt auf und haben eine Bogenform. Die Verdickung 31 ist dabei vorzugsweise am letzten Viertel der Polierfinger 3 angeordnet.

Zwischen den einander benachbarten Polierfingern 3 ist jeweils ein Zwischenraum 32 vorgesehen. Der Zwischenraum 32 erweitert sich, ausgehend vom Zentralbereich 2 in Richtung zum freien Ende der Polierfinger.

In Fig. 2 ist die Rotationsrichtung des rotierbaren Dental-Polierinstruments 1 durch den Pfeil A angedeutet. Wie hierbei ersichtlich ist, sind die Verdickungen 31 am Polierfinger 3 dabei nur an der in Rotationsrichtung A gerichteten Seite der Polierfinger 3 angeordnet.

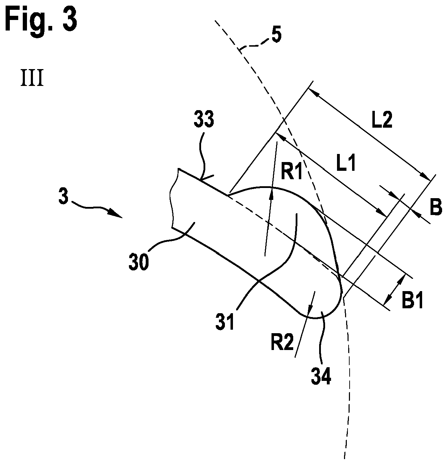

Wie weiter aus den Fig. 2 und 3 ersichtlich ist, sind die Verdickungen 31 derart vorgesehen, dass eine Oberfläche der Verdickungen 31 eine gedachte Hüllkurve 5 des Dental-Polierinstruments bildet.

Die Hüllkurve 5 ist in den Fig. 2 und 3 gestrichelt und schematisch dargestellt. Fig. 3 zeigt im Detail eine Verdickung 31 an einem Endbereich des Polierfingers 3. Wie aus Fig. 3 ersichtlich ist, weist die Verdickung 31 eine durch einen ersten Radius R1 gebildete Außenkontur auf. Die Verdickung 31 ist am Polierfinger 3 dabei mit einer ersten Länge L1 vorgesehen.

Wie aus Fig. 3 ersichtlich ist, ist die Verdickung 31 mit einem kleinen Abstand B von einem äußersten Ende 34 des Polierfingers beabstandet. Diese Beabstandung kann durch Subtraktion der ersten Länge L1 von einer zweiten Länge L2 erhalten werden, wobei die zweite Länge L2 die Länge definiert, welche zwischen dem äußersten Ende 34 des Polierfingers und dem Beginn der Verdickung 31 definiert ist (s. Fig. 3).

Die Verdickung 31 weist ferner noch eine erste Breite B1 auf. Die erste Breite B1 definiert dabei den größten Abstand eines Punktes an der Oberfläche der Verdickung 31 von einer in Fig. 3 gestrichelt eingezeichneten gedachten Verlängerung des Hauptkörpers 30 senkrecht zu dieser gedachten Verlängerung.

Der erste Radius R1 ist vorzugsweise mindestens doppelt so groß wie der zweite Radius R2. Bevorzugt liegt der erste Radius R1 in einem Bereich von 0,4 mm bis 0,9 mm und beträgt bevorzugt 0,65 mm. Weiter bevorzugt ist der zweite Radius R2 in einem Bereich von 0,15 mm bis 0,50 mm und beträgt bevorzugt 0,25 mm.

Hinsichtlich der Längen L1 und L2 sei angemerkt, dass vorzugsweise die erste Länge L1 in einem Bereich von 0,5 mm bis 2,5 mm ist und bevorzugt 1,3 mm beträgt. Die zweite Länge L2 liegt vorzugsweise in einem Bereich von 0,70 mm bis 2,70 mm und beträgt besonders bevorzugt 1,50 mm.

Die erste Breite B1 liegt vorzugsweise in einem Bereich von 0,2 mm bis 0,8 mm und beträgt besonders bevorzugt 0,4 mm.

Ferner ist eine zweite Breite B2 der Verdickungen 31 gleich wie eine Breite der Hauptkörper 30 der Polierfinger 3. Die zweite Breite B2 liegt vorzugsweise in einem Bereich von 0,3 bis 1,4 mm und beträgt besonders bevorzugt 0,7 mm.

Wie aus Fig. 1 weiter ersichtlich ist, weisen die Polierfinger 3 an einem Fußbereich, an welchem die Polierfinger am Zentralbereich 2 fixiert sind, eine etwas größere Breite auf als am Endbereich, an welchem die Verdickung 31 angeordnet ist. Vorzugsweise ist eine Breite des Fußbereichs der Polierfinger 3 doppelt so breit wie eine Breite der Polierfinger 3 am Endbereich.

Ein Übergang zwischen der Verdickung 31 und den anderen Bereichen des Polierfingers in Längsrichtung der Polierfinger ist vorzugsweise kantenfrei ausgebildet.

Bei dem in den Figuren gezeigten Ausführungsbeispiel sind die Verdickungen 31 derart ausgebildet, dass eine Vergrößerung einer Polierfläche um ungefähr 287 % im Vergleich mit Dental-Polierinstrumenten, welche keine Verdickungen an den Polierfingern aufweisen, vorhanden ist. Weiterhin ist ein Volumen einer Verdickung 31 derart vorgesehen, dass dieses Volumen ungefähr 40 % eines Volumens des Polierfingers ohne Verdickung aufweist. Wenn beispielsweise das Volumen des Hauptkörpers 30 des Polierfingers ohne die Verdickung 31 100 mm³ beträgt, beträgt ein Volumen der Verdickung 31 am Hauptkörper 40 mm³.

Bei Benutzung des Dental-Polierinstruments 1 werden die flexiblen Polierfinger 3 verbogen, sodass die Außenseite der Verdickungen 31 in Kontakt mit der zu bearbeitenden Oberfläche kommt. Hierbei sind, wie aus Fig. 2 ersichtlich ist, die Verdickungen 31 in Rotationsrichtung A an den Polierfingern 3 angeordnet. Durch stärkeres Anpressen des Dental-Polierinstruments 1 an die zu bearbeitende Oberfläche wird eine stärkere Verformung der Polierfinger 3 erreicht und auch eine größere Oberfläche der Polierfinger 3 kommt mit der zu bearbeitenden Oberfläche in Kontakt. Hierdurch kann eine Abtragungsrate während der Bearbeitung erhöht werden. Nach einer erfolgten Nutzung des Dental-Polierinstruments 1 stellen sich die Polierfinger 3 wieder in die in Fig. 2 gezeigte Ausgangsposition selbstständig zurück.

Da das Dental-Polierinstrument 1 am Endbereich nur die in Fig. 1 dargestellte zweite Breite B2 aufweist, können auch Bereiche nahe an Zahnzwischenräumen problemlos bearbeitet werden. Insbesondere können genau nur die Oberflächen bearbeitet werden, welche einem Poliervorgang unterzogen werden sollen. Durch die relativ schmale Ausgestaltung der zweiten Breite B2 müssen somit nicht auch benachbarte Bereiche poliert werden, wie dies bei den aus dem Stand der Technik bekannten Dentalinstrumenten der Fall ist.

Das flexible Material für die Polierfinger 3 ist vorzugsweise Polyurethan. Als Polierschleifkörner können beispielsweise Al₂O₃, Diamant oder SiC verwendet werden.

Es sei angemerkt, dass eine Flexibilität der Polierfinger 3 vergrößert werden kann, wenn eine Bogenlänge der Polierfinger 3 verlängert wird. Entsprechend kann die Flexibilität durch Verkürzung der Bogenlänge der Polierfinger 3 reduziert werden.

In diesem Ausführungsbeispiel weist der Zentralbereich 2 einen flanschartigen Absatz 20 auf (s. Fig. 1), welcher auf den Schaft 4, beispielsweise mittels Kleben oder einer anderen Verbindungstechnik fixiert werden kann. Auch kann beispielsweise der Polierbereich auf einen metallischen Schaft oder einen Kunststoff-Schaft aufgespritzt werden.

### Bezugszeichenliste

- 1: Dental-Polierinstrument
- 2: Zentralbereich
- 3: Polierfinger
- 4: Schaft
- 5: Hüllkurve
- 30: Hauptkörper
- 31: Verdickung
- 32: Zwischenraum
- 33: Konvexe Seite des bogenförmigen Polierfingers
- 34: Äußerstes Ende

- A: Rotationsrichtung
- B: Abstand
- B1: Maximale Breite der Verdickung am Hauptkörper
- B2: Breite der Polierfinger 3 in Axialrichtung X-X am Endbereich
- L1: Länge der Verdickung
- L2: Abstand zwischen dem Beginn der Verdickung und dem äußersten Ende
- R1: Radius der Verdickung
- R2: Radius des äußersten Endes
- X-X: Mittelachse

## Patentansprüche

1. Rotierbares Dental-Polierinstrument, umfassend
- einen Zentralbereich (2), und
- eine Vielzahl von Polierfingern (3), welche am Zentralbereich (2) angeordnet sind und vom Zentralbereich (2) vorstehen,
- wobei die Polierfinger (3) flexibel ausgebildet sind,
- wobei an wenigstens einem Polierfinger (3) an einem Endbereich des Polierfingers eine Verdickung (31) ausgebildet ist,
- wobei die Verdickung (31) ausschließlich an einer Seite des Polierfingers (3) angeordnet ist und
- wobei die Vielzahl von Polierfingern (3) in einer Ebene senkrecht zur Rotationsachse des Polierinstruments vom Zentralbereich (2) vorsteht.

2. Dental-Polierinstrument nach Anspruch 1, wobei der Polierfinger (3) bogenförmig ausgebildet ist.

3. Dental-Polierinstrument nach einem der vorhergehenden Ansprüche, wobei der Polierfinger (3) einen viereckigen Querschnitt aufweist.

4. Dental-Polierinstrument nach einem der vorhergehenden Ansprüche, wobei die Verdickungen (31) der Polierfinger (3) eine Hüllkurve (5) des Dentalinstruments definieren, insbesondere eine kreisförmige Hüllkurve.

5. Dental-Polierinstrument nach einem der vorhergehenden Ansprüche, wobei die Verdickungen (31) eine kreisbogenförmige Außenkontur mit einem ersten Radius (R1) aufweisen.

6. Dental-Polierinstrument nach einem der vorhergehenden Ansprüche, wobei die Verdickungen (31) derart ausgebildet sind, dass eine Vergrößerung einer Polierfläche um mehr als 200 %, insbesondere ungefähr 287 %, im Vergleich mit Polierfingern ohne Verdickung vorliegt und/oder wobei ein Volumen einer Verdickung ungefähr 40 % eines Volumens eines Polierfingers ohne Verdickung beträgt.

7. Dental-Polierinstrument nach einem der vorhergehenden Ansprüche, wobei alle Polierfinger (3) eine Verdickung (31) aufweisen und wobei die Verdickungen (31) an den Polierfingern (3) in einer Rotationsrichtung A des Dental-Polierinstruments vorstehen.

8. Dental-Polierinstrument nach einem der Ansprüche 5 bis 7, wobei ein äußerstes Ende (34) des Polierfingers mit einem zweiten Radius (R2) abgerundet ist, welcher insbesondere kleiner ist als der erste Radius (R1) und wobei die Verdickung vom äußersten Ende (34) beabstandet ist.

9. Dental-Polierinstrument nach einem der vorhergehenden Ansprüche, wobei die Polierfinger aus einem Grundmaterial, insbesondere Polyurethan, und Polierschleifkörnern, insbesondere Diamantkörner oder SiC-Körner oder Aluminiumoxid-Körner, hergestellt sind.

## Claims

1. A rotatable dental polishing instrument comprising
- a central region (2), and
- a plurality of polishing fingers (3) which are arranged at the central region (2) and projecting from the central region (2),
- wherein the polishing fingers (3) are flexibly formed,
- wherein a thickened portion (31) is formed on at least one polishing finger (3) at an end region of the polishing finger,
- the thickened portion (31) being arranged exclusively on one side of the polishing finger (3), and
- wherein the plurality of polishing fingers (3) protrude from the central region (2) in a plane perpendicular to the rotational axis of the polishing instrument.

2. The dental polishing instrument according to claim 1, wherein the polishing finger (3) is formed in an arctuate shape.

3. The dental polishing instrument according to one of the preceding claims, wherein the polishing finger (3) has a square cross-section.

4. The dental polishing instrument according to one of the preceding claims, wherein the thickened portions (31) of the polishing fingers (3) define an envelope curve (5) of the dental instrument, especially a circular envelope curve.

5. The dental polishing instrument according to one of the preceding claims, wherein the thickened portions (31) have an arctuate outer contour with a first radius (R1).

6. The dental polishing instrument according to one of the preceding claims, wherein the thickened portions (31) are formed such that an enlargement of a polishing surface by more than 200%, especially about 287% is provided, in comparison with polishing fingers without a thickened portion and/or wherein a volume of a thickened portion is about 40% of a volume of a polishing finger without thickened portion.

7. The dental polishing instrument according to one of the preceding claims, wherein all polishing fingers (3) have a thickened portion (31) and wherein the thickened portions (31) on the polishing fingers (3) project in a rotational direction A of the dental polishing instrument.

8. The dental polishing instrument according to one of claims 5 to 7,
wherein an outermost end (34) of the polishing finger is rounded with a second radius (R2) which especially is smaller than the first radius (R1) and wherein the thickened portion is spaced from the outermost end (34).

9. The dental polishing instrument according to one of the preceding claims, wherein the polishing fingers are made of a base material, especially polyurethane, and polishing abrasive grains, especially diamond grains or SiC grains or aluminum oxide grains.

## Revendications

1. Instrument de polissage dentaire rotatif, comprenant
- une zone centrale (2), et
- une pluralité de doigts de polissage (3), lesquels sont disposés au niveau de la zone centrale (2) et font saillie de la zone centrale (2),
- dans lequel les doigts de polissage (3) sont réalisés de manière flexible,
- dans lequel un épaississement (31) est réalisé au niveau d'au moins un doigt de polissage (3) au niveau d'une zone d'extrémité du doigt de polissage,
- dans lequel l'épaississement (31) est disposé exclusivement au niveau d'un côté du doigt de polissage (3) et
- dans lequel la pluralité de doigts de polissage (3) fait saillie de la zone centrale (2) dans un plan de manière perpendiculaire par rapport à l'axe de rotation de l'instrument de polissage.

2. Instrument de polissage dentaire selon la revendication 1, dans lequel le doigt de polissage (3) est réalisé en forme d'arc.

3. Instrument de polissage dentaire selon l'une quelconque des revendications précédentes, dans lequel le doigt de polissage (3) présente une section transversale rectangulaire.

4. Instrument de polissage dentaire selon l'une quelconque des revendications précédentes, dans lequel les épaississements (31) des doigts de polissage (3) définissent une courbe enveloppe (5) de l'instrument dentaire, en particulier une courbe enveloppe de forme circulaire.

5. Instrument de polissage dentaire selon l'une quelconque des revendications précédentes, dans lequel les épaississements (31) présentent un contour extérieur en forme d'arc de cercle avec un premier rayon (R1).

6. Instrument de polissage dentaire selon l'une quelconque des revendications précédentes, dans lequel les épaississements (31) sont réalisés de telle manière qu'un agrandissement d'une surface de polissage de plus de 200 %, en particulier d'approximativement 287 %, en comparaison avec des doigts de polissage sans épaississement est de mise et/ou dans lequel un volume d'un épaississement est d'approximativement 40 % d'un volume d'un doigt de polissage sans épaississement.

7. Instrument de polissage dentaire selon l'une quelconque des revendications précédentes, dans lequel tous les doigts de polissage (3) présentent un épaississement (31) et dans lequel les épaississements (31) au niveau des doigts de polissage (3) font saillie dans une direction de rotation A de l'instrument de polissage dentaire.

8. Instrument de polissage dentaire selon l'une quelconque des revendications 5 à 7, dans lequel une extrémité la plus extérieure (34) du doigt de polissage est arrondie avec un deuxième rayon (R2), lequel est en particulier inférieur au premier rayon (R1) et dans lequel l'épaississement est tenu à distance de l'extrémité la plus extérieure (34).

9. Instrument de polissage dentaire selon l'une quelconque des revendications précédentes, dans lequel les doigts de polissage sont fabriqués à partir d'un matériau de base, en particulier de polyuréthane, et de grains abrasifs de polissage, en particulier de grains de diamant ou de grains de SiC ou de grains d'oxyde d'aluminium.
